**Europäisches Patentamt**

**European Patent Office**

**Office européen des brevets**

(19)

(11) Veröffentlichungsnummer: **0 005 229
B1**

(12) **EUROPÄISCHE PATENTSCHRIFT**

(45) Veröffentlichungstag der Patentschrift:
25.11.81

(21) Anmeldenummer· 79101230.5

(22) Anmeldetag: 24.04.79

(51) Int. Cl.³· **B 27 K 3/15,** C 09 D 3/80,
C 08 L 33/14

(54) **Luftvernetzende, eingebaute Holzschutzwirkstoffe enthaltende, Polyacrylat-Lackbindemittel.**

(30) Priorität: 03.05.78 DE 2819340

(43) Veröffentlichungstag der Anmeldung:
14.11.79 Patentblatt 79/23

(45) Bekanntmachung des Hinweises auf die Patenterteilung:
25.11.81 Patentblatt 81/47

(84) Benannte Vertragsstaaten:
CH DE FR GB IT NL SE

(56) Entgegenhaltungen:
DE-B-1 299 638
FR-A-1 507 177
FR-A-1 568 839
US-A-3 694 418
US-A-4 085 251

(73) Patentinhaber: BAYER AG, Zentralbereich Patente,
Marken und Lizenzen, D-5090 Leverkusen 1, Bayerwerk
(DE)
Patentinhaber: Desowag-Bayer Holzschutz GmbH.,
Ross-Strasse 76, D-4000 Düsseldorf 1 (DE)

(72) Erfinder: Dhein, Rolf, Dr., Deswatinesstrasse 30,
D-4150 Krefeld (DE)
Erfinder: Poetter, Gerswid, Dr., Räuberstege 17,
D-4134 Rheinberg 1 (DE)
Erfinder: Rudolph, Hans, Dr., Haydnstrasse 9,
D-4150 Krefeld (DE)

## Luftvernetzende, eingebaute Holzschutzwirkstoffe enthaltende, Polyacrylat-Lackbindemittel

Die Erfindung betrifft luftvernetzende Lackbindemittel für Holz und Holzwerkstoffe auf Basis von Glycidyl(meth)acrylat/Copolymerisaten, die mit Holzschutzwirkstoffen, die mindestens eine gegenüber Glycidylgruppen reaktionsfähige phenolische Hydroxylgruppe enthalten, umgesetzt und anschließend mit trocknenden Fettsäuren und gegebenenfalls Dicarbonsäureanhydriden verestert worden sind.

Die holzschützende Oberflächenbehandlung gewinnt zunehmend an Bedeutung, wobei besonders bei wertvollen Hölzern häufig eine Lackierung mit Klarlacken oder nur leicht eingefärbten Lacken bevorzugt wird, um die Holzmaserung sichtbar zu erhalten.

Langölige Alkydharze haben sich für die Oberflächenbehandlung von Holz als besonders geeignet erwiesen, einmal wegen ihrer guten Löslichkeit und leichten Verarbeitbarkeit, zum anderen wegen ihrer durch oxidative Trocknung hervorgerufenen chemischen Vernetzung.

Derartige Alkydharze sind meist aus Phthalsäureanhydrid, Pentaerythrit und/oder Glycerin und ungesättigten natürlichen Fettsäuren des Soja- und Leinöls aufgebaute Polyester, deren Polyesterkette naturgemäß einer gewissen Verseifbarkeit durch Umgebungs- und Wettereinflüsse unterworfen sind.

Zur Unterstützung der holzschützenden Wirkung werden den Lacken auf Alkydharzbasis Wirkstoffe gegen Holzschädlinge wie beispielsweise Pentachlorphenol zugesetzt. Derartige Wirkstoffe können mit der Oberflächenbehandlung oder Lackierung in das Holz eindringen und behalten ihre Wirksamkeit, solange sie nicht durch Flüchtigkeit und Migration ausgetragen werden (vgl. Zeitschrift »Holz als Roh- und Werkstoff«, Heft 31 (1973), S. 137 bis 140).

Polyacrylate sind als Lackrohstoffe ebenfalls bekannt und finden vorzugsweise in der Metall-Lackierung Verwendung, wo sie entweder physikalisch trocknend sind oder über Melaminharze vernetzt werden.

Allerdings hat es auch bereits zahlreiche Versuche gegeben, luftvernetzende Polyacrylate herzustellen.

Solche luftvernetzende Polyacrylate lassen sich einmal aus hydroxylgruppenhaltigen Polyacrylaten durch Verestern mit ungesättigten Fettsäuren herstellen, haben dann aber den Nachteil, daß sie nicht ausreichend glänzen (vgl. GB-PS 767 476 und GB-PS 793 776).

Fügt man der Umsetzung der Glycidylpolyacrylate mit den ungesättigten Fettsäuren noch eine Umsetzung mit Dicarbonsäureanhydriden in der Weise an, daß Halbester der Säurezahl 20 bis 60 entstehen (vgl. DE-PS 1 720 697), behebt man diese Glanzprobleme pigmentierter Lacke, verliert aber beim Lagern siccativierter und gegen Hautbildung mit Oximen stabilisierter Lacke sehr bald die anfängliche gute Trocknung (siehe Vergleich 3).

Darin wird bereits eine gewisse Empfindlichkeit der luftvernetzenden Polyacrylate gegen Zusätze sichtbar.

Eine weitere drastische Trocknungsverzögerung erfahren derartige luftvernetzende Polyacrylate, wenn man versucht, sie für den Bereich der holzschützenden Oberflächenbehandlung bzw. Lackierung mit Wirkstoffen vom Pentachlorphenoltyp zu versetzen (siehe Vergleichsversuch 2).

Überraschenderweise wurde nun gefunden, daß sehr wertvolle holzschützende Lackbindemittel auf der Grundlage luftvernetzender Polyacrylate herstellbar sind, wenn Glycidylgruppen enthaltende Copolyacrylate mit Holzschutzwirkstoffen, die gegenüber Epoxidgruppen aktive Wasserstoffatome enthalten, unter teilweiser Aufspaltung der Epoxidfunktionen umgesetzt werden und die restlichen, vorzugsweise in der Menge überwiegenden Glycidylgruppen nacheinander mit trocknenden Fettsäuren und gegebenenfalls mit Dicarbonsäureanhydriden zu Halbestern verestert werden.

Ein besonderer Vorteil der erfindungsgemäßen Lackbindemittel ist die chemische Bindung der Holzschutzwirkstoffe an das Polymermolekül, wodurch eine verzögerte Freisetzung des Wirkstoffs erfolgt und somit eine verlängerte Schutzwirkung erzielt wird.

Gegenstand der Erfindung sind somit Holzschutzwirkstoffe enthaltende, luftvernetzende Lackbindemittel auf der Grundlage von Copolymerisaten aus copolymerisierten Einheiten von Glycidyl(meth)-acrylaten und mindestens einem weiteren Vinylmonomeren, dadurch gekennzeichnet, daß das Copolymerisat — stets bezogen auf Lackbindemittel — mit 0,01 bis 30 Gew.-% mindestens eines Holzschutzwirkstoffs mit mindestens einer gegenüber den Glycidylgruppen reaktionsfähigen phenolischen Hydroxylgruppe, anschließend mit 20 bis 60 Gew.-% lufttrocknenden, natürlichen oder isomerisierten Fettsäuren oder deren Mischungen, sowie daran anschließend mit 0 bis 10 Gew.-% eines Dicarbonsäureanhydrids umgesetzt worden ist, und das Lackbindemittel durchschnittliche Molekulargewichte $\bar{M}_n$ von 1500 bis 15 000 und Säurezahlen von 3 bis 15 besitzt.

Als weitere Vinylmonomere sind beispielsweise geeignet: Styrol und durch Methylgruppen und Chlor kernsubstituierte Styrole, $\alpha$-Methylstyrol, Vinylacetat, (Meth)-Acrylamid, (Meth)-Acrylnitril, (Meth)-Acrylsäurealkylester, vorzugsweise Styrol und (Meth)-Acrylsäurealkylester mit 1 bis 10 Kohlenstoffatomen in der Alkoholkomponente.

Die Herstellung der epoxidgruppenhaltigen Copolymerisate erfolgt in bekannter Weise durch radikalische Copolymerisation der Vinylmonomeren mit den epoxidgruppenhaltigen Comonomeren,

2

und zwar bevorzugt in organischen Lösungsmitteln (vgl. GB-PS 793 776 und 767 476, sowie DE-PS 1 720 697).

Vorzugsweise beträgt im Bindemittel der Gehalt an copolymerisierten Einheiten des Glycidylacrylats und/oder Glycidylmethacrylats 5 bis 40 Gew.-%.

Holzschutzwirkstoffe, wie sie in den Lackbindemitteln der vorliegenden Erfindung in eingebauter Form enthalten sind, besitzen mindestens eine gegenüber den Glycidylgruppen reaktionsfähige phenolische Hydroxylgruppe. Beispielsweise seien namentlich genannt: Chlorphenole mit 1 bis 5 Chloratomen im Benzolkern, 3-Methyl-4-chlorphenol, o-Hydroxy-diphenyl, 2,2'-Dihydroxy-5,5'-dichlordiphenylmethan, Benzylphenole, p-Chlor-o-Benzyl-phenol, Benzylkresole, Chlorxylenole oder Mischungen der vorgenannten Verbindungen, insbesondere Pentachlorphenol.

Die Addition der Holzschutzwirkstoffe an die Glycidylgruppen des Copolymerisats kann in Substanz, bevorzugt jedoch in Lösungsmitteln durchgeführt werden. Derartige Lösungsmittel sind z. B. Toluol, Xylol, Aromatengemische mit Siedepunkten von 80 bis 170°C, Äthylglykolacetat, Methyläthylketon, Methylisobutylketon, Lackbenzin anteilig. Die Umsetzungstemperaturen können 80 bis 150°C betragen, jedoch können diese Grenzen in speziellen Fällen auch unter- oder überschritten werden. Falls gewünscht, kann die Anlagerung in Gegenwart von etwa 0,01 bis 3 Gew.-%, bezogen auf Glycidylgruppen, an basischen Katalysatoren wie tert. Aminen oder Alkalihydroxiden durchgeführt werden. Die Menge an eingebautem Holzschutzwirkstoff im Lackbindemittel beträgt vorzugsweise 0,01 bis 30 Gew.-%. Diese Menge kann jedoch wesentlich überschritten werden, falls das eingebauten Wirkstoff enthaltende Lackbindemittel mit wirkstofffreiem Lackmitteln abgemischt werden soll. Wesentlich ist lediglich, daß in der Gesamtmischung der Bindemittel der eingebaute Gehalt an Holzschutzwirkstoff 0,01 bis 30 Gew.-% beträgt.

Die anschließende Addition der trocknenden Fettsäuren (d. h. natürliche trocknende und isomerisierte trocknende Fettsäuren) an die epoxidgruppenhaltigen Copolymerisate erfolgt bevorzugt in Abwesenheit von Katalysatoren, bei Temperaturen von 60 bis 200°C, vorzugsweise bei 100 bis 170°C und wird in organischen Lösungsmitteln, wie Xylol, Solventnaphtha, so weit durchgeführt, daß die Säurezahl, bezogen auf lösungsmittelfreies Bindemittel (= Copolymerisat + Holzschutzwirkstoff + trocknende Fettsäuren + gegebenenfalls Dicarbonsäureanhydrid), unterhalb 15, vorzugsweise unterhalb 12, liegt.

Der Gehalt an trocknenden Fettsäuren im lösungsmittelfreien Bindemittel kann 20 bis 60 Gew.-%, bevorzugt 35 bis 60 Gew.-%, betragen.

Natürliche, trocknende Fettsäuren sind beispielsweise die Fettsäuren des Leinöls, Sojaöls, Sonnenblumenöls, Baumwollsaatöls, Erdnußöls, Tallöls und Safloröls in ihrer natürlichen Zusammensetzung, d. h., diese natürlichen trocknenden Fettsäuren stellen Gemische von gesättigten, einfach und/oder mehrfach ungesättigten Fettsäuren mit trocknenden Eigenschaften dar, wobei die mehrfach ungesättigten Fettsäuren im wesentlichen isolierte Doppelbindungen besitzen. Beispielsweise haben die Fettsäuren der vorstehend genannten Öle etwa die nachstehende Zusammensetzung in Gewichtsprozenten:

| | | Lein-öl | Soja-öl | Sonnen-blumen-öl | Baum-woll-saat-öl | Erdnuß-öl | Tall-öl | Sa-flor-öl |
|---|---|---|---|---|---|---|---|---|
| Myristinsäure | $(C_{14})$ | 0,2 | — | — | 3,3 | 0,5 | — | 0,1 |
| Palmitinsäure | $(C_{16})$ | 5,6 | 6,5 | 3,5 | 19,9 | 7,8 | 4,6 | 4,5 |
| Stearinsäure | $(C_{18})$ | 3,5 | 4,5 | 2,9 | 1,3 | 3,1 | 4,6 | 2,0 |
| Arachinsäure | $(C_{20})$ | 0,6 | 0,7 | 0,6 | 0,6 | 2,4 | — | 0,4 |
| Behensäure | $(C_{22})$ | — | — | — | — | 3,1 | — | 0,4 |
| Lignocerinsäure | $(C_{24})$ | 0,1 | — | 0,4 | — | 1,1 | — | — |
| Ölsäure | $(C_{18})$ | 21,0 | 33,5 | 34,1 | 29,6 | 56,0 | 30 | 20 |
| Linolsäure | $(C_{18})$ | 24,0 | 52,5 | 58,5 | 45,3 | 26,0 | 24 | 70 |
| Linolensäure | $(C_{18})$ | 45,0 | 2,3 | — | — | — | 8 | 3 |

Die natürlichen, trocknenden Fettsäuren enthalten ca.

5 bis 25 Gew.-% gesättigte $C_8$—$C_{24}$-Fettsäuren
20 bis 60 Gew.-% monoolefinisch ungesättigte $C_{18}$-Fettsäuren, insbesondere Ölsäure,
25 bis 75 Gew.-% dreifach und/oder zweifach ungesättigte $C_{18}$-Fettsäuren mit im wesentlichen isolierten Doppelbindungen.

Die isomerisierten, trocknenden Fettsäuren enthalten 40 bis 80 Gew.-% an konjugierten Fettsäuren und können durch Isomerisation der natürlichen, trocknenden Fettsäuren erhalten werden. Konjugierte Fettsäuren sind $C_{18}$-Fettsäuren mit mindestens 2 konjugierten Doppelbindungen. Beispielsweise seien genannt:
9.11-Linolsäure, 10.12-Linolsäure, 8.10-Octadecadiensäure, Eläostearinsäure (= 9.11.13-Octadecatriensäure), Pseudoeläostearinsäure (= 10.12.14-Octadecatriensäure), Parinarsäure (= 9.11.13.15-Octadecatetraensäure), Licansäure (= 4-Keto-9.11.13-Octadecatriensäure) und die Stereoisomeren der vorgenannten Säuren, vorzugsweise 9.11-Linolsäure und Eläostearinsäure und deren Stereoisomere.

Die Isomerisierung der natürlichen, trocknenden Fettsäuren erfolgt nach bekannten Ver⁻ ⁾n und ist beispielsweise beschrieben in Ullmanns Enzyklopädie der technischen Chemie, (1956), B    eiten 538 bis 539.

Weiter können die mit Holzschutzwirkstoff und trocknenden Fettsäuren umgesetzten Gly    gruppen enthaltenden Copolymerisate mit bis zu 10 Gew.-%, bezogen auf Binden   l, an Dicarbonsäureanhydriden modifiziert worden sein, wobei die entstandenen bzw. vorh idenen Hydroxylgruppen der erhaltenen verätherten und veresterten Produkte mit der Carbonsäureanhydridgruppe zu Halbestern reagiert haben.

Geeignete Dicarbonsäureanhydride sind z. B.:
Bernsteinsäureanhydrid, Maleinsäureanhydrid, Phthalsäureanhydrid, Tetrahydrophthalsäureanhydrid, Hexahydrophthalsäureanhydrid, Methylhexahydrophthalsäureanhydrid, Endomethylentetrahydrophthalsäureanhydrid, halogenierte Phthalsäureanhydride wie Tetrachlorphthalsäureanhydrid, Tetrabromphthalsäureanhydrid, 1,4,5,6,7,7-Hexychlorbicyclo(2,2,1)-hepten-5-dicarbonsäure-(2,3)-anhydrid, Diglykolsäureanhydrid.

Bevorzugt sind Tetrahydrophthalsäureanhydrid bzw. dessen Isomere.

Die Addition der Anhydride an die Hydroxylgruppen der erhaltenen wirkstoff- und fettsäurehaltigen Copolymerisate und Halbesterbildung erfolgt bei Temperaturen von etwa 50 bis 180°C, vorzugsweise 100 bis 140°C. Dabei wird das Dicarbonsäureanhydrid in solchen Mengen eingesetzt, daß die Säurezahl, bezogen auf Bindemittel nach Halbesterbildung bei 3 bis 15 mg KOH pro g Substanz liegt.

Vorzugsweise liegen die Dicarbonsäureanhydridmengen bei 0,5 bis 3 Gew.-%, stets bezogen auf Gesamtkomponenten des Bindemittels (Copolymerisat + Holzschutzwirkstoff + Fettsäuren + gegebenenfalls Dicarbonsäureanhydrid). Höhere Säurezahlen wirken stark trocknungsverzögernd in Gegenwart von Oximen.

Die Säurezahlen der luftvernetzenden Lackbindemittel betragen 3 bis 15 und stammen entweder nur von freien, noch luftvernetzenden Fettsäuren, wobei dann die Säurezahl möglichst unter 12 bleibt oder von freien, noch luftvernetzenden Fettsäuren und Halbestergruppen aus der gegebenenfalls angeschlossenen Anhydridumsetzung. Die durchschnittlichen Molgewichte ($\overline{M}_n$, Zahlenmittel) der erfindungsgemäßen Lackbindemittel betragen 1500 bis 15 000, vorzugsweise 1800 bis 9000, bestimmt in Tetrahydrofuran nach der Methode der Dampfdruckerniedrigung.

Zur Herstellung von Anstrichmitteln bzw. Lacken werden den erfindungsgemäßen Bindemitteln übliche Lösungsmittel, Pigmente, Farbstoffe, Hilfsmittel, Stabilisatoren, Hautverhinderungsmittel, Siccative und Füllstoffe, zugesetzt.

Für die Anwendung als holzschützendes Imprägniermittel werden vorzugsweise stark mit Lösungsmittel, z. B. Benzinen verdünnte, klare bzw. niedrigpigmentierte Lacklösungen eingesetzt.

Besonders bevorzugte erfindungsgemäße luftvernetzende Lackbindemittel — bezogen auf Copolymerisat + Holzschutzwirkstoff + trocknende Fettsäuren + gegebenenfalls Dicarbonsäureanhydrid — sind aus

a) 10 bis 40 Gew.-%, insbesondere 15 bis 35 Gew.-%, copolymerisierten Einheiten von Glycidylacrylat, Glycidylmethacrylat oder deren Mischungen,

b) 70 bis 10 Gew.-%, insbesondere 20 bis 40 Gew.-% copolymerisierten Einheiten mindestens eines der Monomeren Styrol und (Meth)-Acrylsäureester mit 1 bis 10 C-Atomen in der Alkoholkomponente,

c) 0,01 bis 30 Gew.-%, insbesondere 5 bis 20 Gew.-%, Holzschutzwirkstoff mit mindestens einem gegenüber den Glycidylgruppen reaktionsfähigen Wasserstoffatom, eingebaut in das Lackbindemittel durch Addition des reaktionsfähigen Wasserstoffs des Holzschutzwirkstoffs an Glycidylgruppen des Copolymerisats aus a) und b),

d) 20 bis 60 Gew.-%, insbesondere 30 bis 50 Gew.-%, lufttrocknenden, natürlichen oder isomerisier-

4

ten Fettsäuren oder deren Mischungen, eingebaut in das Lackbindemittel durch Veresterung mit Glycidyl- oder Hydroxylgruppen oder deren Mischungen des Polymeren aus a), b) und c) sowie

e) 0 bis 10 Gew.-%, insbesondere 0,5 bis 3 Gew.-%, Dicarbonsäureanhydrid, eingebaut in das Lackschutzmittel durch Halbveresterung mit den Hydroxylgruppen des Polymeren aus a), b), c) und d),

aufgebaut.

Die in den Beispielen angegebenen Teile und Prozente beziehen sich auf das Gewicht. Die Molekulargewichte $\overline{M}_n$ wurden osmometrisch nach der Methode der Dampfdruckerniedrigung in Tetrahydrofuran bestimmt.

### Vergleichsbeispiel 1 (ohne Holzschutzwirkstoff)

Aus

```
 934,2 Tln  Styrol
 482,4 Tln  Methylmethacrylat
  38,4 Tln  Butylacrylat und
 681,6 Tln  Glycidylmethacrylat wird in Gegenwart von
  46,1 Tln  Di-tert.-butylperoxid
  10,9 Tln  Dodecylmercaptan und
2043,6 Tln  Xylol wird
```

nach üblichen Verfahren in einer ersten Stufe durch Polymerisation des Monomerengemisches in der angegebenen Menge Xylol bei 110°C ein Glycidylpolyacrylat einer Viskosität von 40 sec (bestimmt gemäß DIN 53 211) nach Verdünnung mit Xylol auf 40% hergestellt.

Zu 3440,9 Tln der 42%igen Copolymerisatlösung werden 974,6 Tle einer isomerisierten Sojaölfettsäure mit

```
ca.  8%  gesättigter C12- bis C18-Fettsäure
ca. 31%  Ölsäure
ca. 51%  Linolsäure
ca. 10%  Linolensäure
```

wobei Linol- und Linolensäure zu 42 bis 48% als konjugierte Diene vorliegen, zugegeben und bei 135°C in einer Stickstoffatmosphäre bis zu einer Säurezahl von 13 verestert. Die Viskosität, 40%ig in Xylol, beträgt 42 sec (DIN 53 211).

Anschließend werden zu 4171,5 Tln der vorstehend erhaltenen 56,5%igen Lösung in Xylol 27,1 Tle Tetrahydrophthalsäureanhydrid zugegeben und bei 130°C zum Halbester umgesetzt, bis ein Polymer der Säurezahl 15 und der Viskosität 100 sec (40%ig in Xylol gemäß DIN 53 211) erhalten wird. Das durchschnittliche Molekulargewicht $\overline{M}_n$ beträgt 7200.

Das polymere Lackbindemittel enthält in copolymerisierter bzw. eingebauter Form Einheiten von:

```
25,86%  Styrol
13,36%  Methylmethacrylat
 1,06%  Butylacrylat
18,87%  Glycidylmethacrylat
39,70%  konjugierte Sojaölfettsäure
 1,15%  Tetrahydrophthalsäureanhydrid
```

Aus der 56,5%igen Lösung des Polymeren in Xylol wird ein Klarlack folgender Zusammensetzung hergestellt:

```
100,00 Tle  40%ige Polymerlösung in Xylol
  1,6 Tle    Co-, Pb- und Mn-naphthenat 1 : 2 in Xylol
```

Der Lack enthält

```
0,02 Tle   Co
0,02 Tle   Mn
0,293 Tle  Pb
```

bezogen auf 100 Tle Polymer.

0 005 229

Die Trocknungsergebnisse sind aus der Tabelle ersichtlich.

Vergleich 2 (mit zugesetztem Holzschutzwirkstoff)

enthält:

100,00 Tle 40%ige Lösung des Polymeren aus Vergleich 1 in Xylol
1,00 Tle Pentachlorphenol
1,60 Tle Co-, Pb-, Mn-naphthenat (1 : 2 in Xylol)

entsprechend

0,02 Tle Co
0,02 Tle Mn
0,293 Tle Pb

bezogen auf 100 Tle Polymer.
Die Trocknungsergebnisse sind aus der Tabelle ersichtlich.

Beispiel 1 (eingebauter Holzschutzwirkstoff)

Aus

934,2 Tln Styrol
482,4 Tln Methylmethacrylat
38,4 Tln Butylacrylat und
681,6 Tln Glycidylmethacrylat wird in Gegenwart von
46,1 Tln Di-tert.-butylperoxid
10,9 Tln Dodecylmercaptan und
2043,5 Tln Xylol wird

nach üblichen Verfahren in einer ersten Stufe durch Polymerisation der Monomeren in Xylol bei 110°C in einer Stickstoffatmosphäre ein Glycidylgruppen enthaltendes Copolymerisat hergestellt mit einer Viskosität von 40 sec (DIN 53 211, 40%ig in Xylol).
Dann werden zu

3528,0 Tln der ca. 42%igen Xylollösung des Copolymerisats
28,8 Tln Pentachlorphenol und
953,9 Tln des Fettsäuregemisches aus dem Vergleich 1

zugegeben und in einer Stickstoffatmosphäre bei 135°C verestert bis zur einer Säurezahl von 12 und einer Viskosität von ca. 40 sec (DIN 53 211, 40%ig in Xylol). Hierbei wird zweckmäßigerweise so vorgegangen, daß erst die Umesterung des Pentachlorphenols durch Veräthern während 30 Minuten bei 120°C und dann erst die Zugabe des Fettsäuregemisches erfolgt.
Anschließend werden bei 130°C 27,8 Tle Tetrahydrophthalsäureanhydrid zu 4278,7 Tln der vorstehend erhaltenen 56,1%igen Lösung des mit Pentachlorphenol und Fettsäuregemisch modifizierten Copolymerisats zugegeben und zum Halbester umgesetzt, der eine Säurezahl von 15 und eine Viskosität von ca. 100 sec (DIN 53 211, 40%ig in Xylol) hat. Das durchschnittliche Molekulargewicht $\overline{M}_n$ beträgt 8850.
Das polymere Lackbindemittel enthält in copolymerisierter bzw. eingebauter Form Einheiten von:

25,86% Styrol
13,36% Methylmethacrylat
1,06% Butylacrylat
18,87% Glycidylmethacrylat
1,16% Pentachlorphenol
38,54% konjugierte Sojafettsäure
1,15% Tetrahydrophthalsäureanhydrid

Auch aus diesem Lackbindemittel wurde ein lufttrocknender Klarlack hergestellt, diesmal bereits Pentachlorphenol einkondensiert enthaltend, mit folgender Zusammensetzung:

6

100,00 Tle  40%ige Polymerlösung in Xylol
  1,60 Tle  Co-, Pb- und Mn-naphthenat (1 : 2 in Xylol)

entsprechend

  0,02 Tle  Co
  0,02 Tle  Mn
  0,293 Tle  Pb

bezogen auf 100 Tle Polymer.

Die Trocknungsergebnisse sind aus der Tabelle ersichtlich.

Die Tabelle erläutert die unterschiedlichen Trocknungseigenschaften und zeigt deutlich die Vorteile der erfindungsgemäßen, Wirkstoffe einkondensiert enthaltenden Polymerisate.

Die Resultate zeigen deutlich, daß das Wirkstoff einkondensiert enthaltende erfindungsgemäße Bindemittel auch nach Lagerung sehr gut trocknet, während das Zumischen des Wirkstoffs bereits nach 24 Stunden eine deutliche Trocknungsverzögerung bewirkt.

Tabelle

Trocknungsvergleich verschieden lange gelagerter Klarlacke

| Klarlack | Trocknungsverlauf sofort nach Herstellung der Lacke | | | | | Trocknungsverlauf nach 24 h Lagerung der Klarlacke | | | | | | |
|---|---|---|---|---|---|---|---|---|---|---|---|---|
| | Zeit in Stunden*) | | | | | | | | | | | |
| | 0,5 | 1 | 1,5 | 2 | 2,5 | 0,5 | 1 | 1,5 | 2 | 2,5 | 3 | 3,5 |
| Vergleich 1 | 2 | 0—1 | 0—1 | 0 | | 2—3 | 1 | 0—1 | 0—1 | 0 | | |
| Vergleich 2 | 1 | 0—1 | 0 | | | 2—3 | 1 | 0—1 | 0—1 | 0—1 | 0—1 | 0 |
| Beispiel 1 | 1 | 0 | | | | 3—4 | 1 | 0—1 | 0 | | | |

Bedeutung der Trocknungsstufe:
Prüfung von Hand 5 = feucht
4 = stark klebend
3 = angezogen
2 = staubtrocken
1 = fast klebfrei
0 = trocken

*) Zeit: angegeben in Stunden und halben Stunden nach Ausstreichen der Proben aus Glasplatten.

In einem weiteren Beispiel mit höherem Gehalt wird der Unterschied zwischen eingebautem und zugemischtem Pentachlorphenol noch deutlicher.

Vergleich 3

In analoger Weise zu Vergleich 1 und 2 wird ein Pentachlorphenol-freies Bindemittel hergestellt, das die folgende prozentuale Zusammensetzung zeigt (copolymerisierte bzw. eingebaute Einheiten in Gew.-%):

  25,9 Styrol
  13,3 Methylmethacrylat
   1,1 Butylacrylat
  18,9 Glycidylmethacrylat
  39,7 konjugierte Sojafettsäure
   1,1 Tetrahydrophthalsäureanhydrid

100 Gew.-Tle der 40%igen Lösung dieses Polymerisats in einem Aromatengemisch werden 19,9% Pentachlorphenol, bezogen auf Bindemittel und Pentachlorphenol, zugemischt und daraus ein Klarlack hergestellt und mit 2% Co-octoat (6% Metallgehalt), bezogen auf festes Bindemittel, siccativiert und mit 1,5% Hautverhinderungsmittel (88%ige Butanonoxim-Lösung) stabilisiert.

7

## Beispiel 2

In analoger Weise zu Beispiel 1 wird ein Pentachlorphenol einkondensiert enthaltendes erfindungsgemäßes Bindemittel der folgenden Zusammensetzung (copolymerisierte bzw. eingebaute Einheiten in Gew.-%) hergestellt:

25,9 Gew.-% Styrol
13,3 Gew.-% Methylmethacrylat
1,1 Gew.-% Butylacrylat
18,9 Gew.-% Glycidylmethacrylat
19,9 Gew.-% Pentachlorphenol
19,8 Gew.-% konjugierte Sojafettsäure
1,1 Gew.-% Tetrahydrophthalsäureanhydrid

100 Teile der 40%igen Lösung dieses erfindungsgemäßen Polymerisates wurden ebenso siccativiert wie Vergleich 3.

Die Trocknungszeit des Bindemittels des Beispiels 2 beträgt $4^1/2$ Stunden, die des zugemischten Pentachlorphenol enthaltenden Bindemittels in Vergleich 3 über 8 Stunden.

Das folgende Beispiel 3 zeigt, daß es in einigen Lackformulierungen auch möglich ist, mit unsiccativierten Lacken gut trocknende Holzschutzsysteme zu erstellen.

## Beispiel 3

Das Pentachlorphenol einkondensiert enthaltende Bindemittel von Beispiel 2 wird ohne Zugabe von Siccativen und Hautverhinderungsmitteln 16,5%ig in einem Aromatengemisch gelöst. Die Zeit bis zur Klebefreitrocknung auf Glasplatten beträgt ca. 2 Stunden.

Auch in einem pigmentierten Lack kann so verfahren werden, daß Siccative und Hautverhinderungsmittel entfallen bei der folgenden Lackzusammensetzung:

30 Teile einer 55%igen Lösung des Bindemittels gemäß Beispiel 2 in einem Aromatengemisch
67 Teile eines Aromatengemisches
3 Teile einer Pigmentpräparation (ca. 30% Pigment im Alkydharz)

Trocknungszeit: $2^1/2$ Stunden

In derartige Formulierungen können neben Pigmenten auch weitere Insekticide zugemischt werden.

30 Teile Bindemittellösung wie oben angegeben
66,5 Teile Aromatengemisch
0,5 Teile $\gamma$-Hexachlorcyclohexan als Insekticid
3,0 Teile Pigmentpräparation wie oben angegeben

Trocknungszeit: $2^1/2$ Stunden

### Patentansprüche

1. Holzschutzwirkstoff enthaltende, luftvernetzende Lackbindemittel auf der Grundlage von Copolymerisation aus copolymerisierten Einheiten von Glycidyl(meth)-acrylaten und mindestens einem weiteren Vinylmonomeren, dadurch gekennzeichnet, daß das Copolymerisat — stets bezogen auf Lackbindemittel — mit 0,01 bis 30 Gew.-% mindestens eines Holzschutzwirkstoffes mit mindestens einer gegenüber den Glycidylgruppen reaktionsfähigen phenolischen Hydroxylgruppe, anschließend mit 20 bis 60 Gew.-% an lufttrocknenden natürlichen oder isomerisierten Fettsäuren oder deren Mischungen, sowie daran anschließend mit 0 bis 10 Gew.-% eines Dicarbonsäureanhydrids umgesetzt worden ist, und das Lackbindemittel durchschnittliche Molekulargewichte $\overline{M}_n$ von 1500 bis 15 000 und Säurezahlen von 3 bis 15 besitzt.

2. Holzschutzwirkstoff enthaltende, luftvernetzende Lackbindemittel gemäß Anspruch 1, dadurch gekennzeichnet, daß der Holzschutzwirkstoff Pentachlorphenol ist.

3. Verwendung der gemäß den Ansprüchen 1 und 2 erhaltenen Lackbindemittel bei der Herstellung von luftvernetzten Anstrichen.

**Claims**

1. Air-cross-linkable lacquer binders containing a wood preservative and based on copolymers of copolymerised units of glycidyl(meth)acrylates and at least one other vinyl monomer, characterised in that the copolymer has been reacted with — based in each case on the quantity of lacquer binder — 0.01 to 30% by weight of at least one wood preservative having at least one glycidyl-reactive phenolic hydroxyl group, then with 20 to 60% by weight of air-drying natural or isomerised fatty acids or mixtures thereof, and thereafter with 0 to 10% by weight of a dicarboxylic acid anhydride, and the lacquer binder has average molecular weights $\overline{M}_n$ of 1500 to 15 000 and acid numbers of 3 to 15.

2. Air-cross-linkable lacquer binders containing a wood preservative, according to Claim 1, characterised in that the wood preservative is pentachlorophenol.

3. Use of the lacquer binders obtained according to Claims 1 and 2 in the production of air-crosslinked paints.

**Revendications**

1. Liant pour peintures et vernis, réticulant à l'air, contenant un produit pour la protection des bois, à base de copolymères de motifs copolymérisés d'acrylate ou méthacrylate de glycidyle et d'au moins un autre monomère vinylique, caractérisé en ce que le copolymère — dans tous les cas par rapport au liant pour peintures et vernis — a été mis à réagir avec 0,01 à 30% en poids d'au moins un produit pour la protection des bois contenant au moins un groupe hydroxy phénolique réactif avec les groupes glycidyle, puis avec 20 à 60% en poids d'acides gras naturels ou isomérisés séchant à l'air ou leurs mélanges, puis ensuite avec 0 à 10% en poids d'un anhydride d'acide dicarboxylique, et en ce que le liant pour peintures et vernis possède un poids moléculaire moyen $\overline{M}n$ de 1500 à 15 000 et un indice d'acide de 3 à 15.

2. Liant pour peintures et vernis réticulant à l'air, contenant un produit pour la protection des bois, selon la revendication 1, caractérisé en ce que le produit pour la protection des bois est le pentachlorophénol.

3. Utilisation des liants pour peintures et vernis obtenus selon les revendications 1 et 2 pour l'application de revêtements réticulant à l'air.